# EUROPÄISCHE PATENTSCHRIFT

(11) **EP 3 376 915 B1**
(45) Veröffentlichungstag und Bekanntmachung des Hinweises auf die Patenterteilung: **03.11.2021**
(21) Anmeldenummer: 16794658.1
(22) Anmeldetag: 14.11.2016
(51) Int. Cl.: A47J 31/44, A47J 31/52

(54) **GETRÄNKEZUBEREITUNGSMASCHINE, SYSTEM MIT GETRÄNKEZUBEREITUNGSMASCHINE, VERFAHREN ZU DESSEN ANSTEUERUNG**
MACHINE FOR MAKING BEVERAGES, SYSTEM WITH DRINK PREPARATION MACHINE, METHOD OF CONTROLLING THE SAME
MACHINE DE PRÉPARATION DE BOISSONS, SYSTÈME COMPRENANT UNE MACHINE DE PRÉPARATION DE BOISSONS, SON PROCÉDÉ DE COMMANDE

(30) Priorität: 16.11.2015 EP 15194667
(43) Veröffentlichungstag der Anmeldung: 26.09.2018
(73) Patentinhaber: Tchibo (Schweiz) AG, 8304 Wallisellen (CH)
(72) Erfinder: STASCH, Rafael, 59757 Arnsberg (DE); TERNITÈ, Rüdiger, 21149 Hamburg (DE); STEIN, Robert, 24576 Bad Bramstedt (DE); HARTMANN, Doreen, 02827 Görlitz (DE)
(74) Vertreter: Frei Patent Attorneys
(86) Internationale Anmeldenummer: PCT/EP2016/077593
(87) Internationale Veröffentlichungsnummer: WO 2017/085020

(56) Entgegenhaltungen:
- EP-A1- 2 345 352
- EP-A1- 2 572 609
- EP-A2- 1 440 640
- WO-A1-2015/062272
- US-A1- 2015 201 796

## Beschreibung

Die Erfindung betrifft das Gebiet der Getränkezubereitungsmaschinen zum Zubereiten von Getränken oder dergleichen aus einer Portionspackung mit einer Portionsverpackung (bspw. Kapsel) und einem in der Portionsverpackung enthaltenen Extraktionsgut (bspw. Kaffee).

Getränkezubereitungsmaschinen zum Zubereiten von Getränken oder dergleichen aus einem in einer Portionsverpackung vorhandenen Extraktionsgut sind beispielsweise als Kaffee- oder Espressomaschinen bekannt. In vielen entsprechenden Systemen sind die Portionsverpackungen als Kapsel ausgebildet, in denen das Extraktionsgut bspw. luftdicht abgeschlossen ist. Für die Extraktion wird die Kapsel angestochen, beispielsweise an zwei einander gegenüberliegenden Seiten. Auf der ersten Seite wird dann eine Extraktionsflüssigkeit - im Allgemeinen heisses Wasser - eingeleitet. Auf der zweiten Seite wird das Extraktionsprodukt aus der Kapsel ausgeleitet. Dies geschieht in einem sogenannten Brühmodul.

Neben einem Brühmodul können eine oder mehrere weitere Einheiten zum Fördern und Beifügen einer weiteren Getränkekomponente wie beispielsweise Milch und/oder Milchschaum vorliegen. So kann die Getränkezubereitungsmaschine ein Getränk oder allgemein gesprochen ein Gesamtprodukt aus zwei oder mehr Teilprodukten herstellen.

Je nach Art des Getränkes weisen entsprechende Zubereitungsverfahren eine Vielzahl von Parametern auf.

WO 2015/062272 A1 zeigt eine Kaffeemaschine, welche Zubereitungsparameter über ein Computernetzwerk erhält. Die Identifikation eines Kaffeeproduktes geschieht mit einer Kamera oder einem Barcodeleser anhand einer Verpackung des Produktes, ggf. mit Unterstützung durch den Benutzer. Anhand der Identifikation werden Zubereitungsparameter von einem Server geladen. Sie können angepasst und die Anpassungen gespeichert werden.

EP 1 440 640 A2 zeigt eine Niederdruck-Getränkezubereitungsmaschine, auch für Kaffee. Schwerpunkt ist die mechanische Konstruktion und die Betriebsweise. Unter anderem kann ein Code einer Portionenkapsel gelesen werden. Der Code definiert Zubereitungsparameter direkt, also nicht einen Kapseltyp. Damit wird vermieden, dass Kapseltypen und zugeordnete Parameter in der Maschine gespeichert und ergänzt werden müssen. Bei der sequentiellen Verwendung zweier Kapseln kann Information über die erste verwendet werden, um die Zubereitung mit der zweiten anzupassen. Eine Anpassung von Zubereitungsparametern durch einen Benutzer ist nicht erkennbar.

EP 2 345 352 A1 zeigt eine Kaffeekapsel mit 2D-Barcode. Dieser enthält Produkteinformationen inkl. Zubereitungsparameter, oder eine Webadresse. Es werden aber keine gespeicherten Zubereitungsparameter entsprechend dem Code abgerufen sondern Zubereitungsparameter sind direkt als Teil des Codes dargestellt.

EP 2 572 609 A1 zeigt eine Teemaschine, in welcher gespeicherte Zubereitungsparameter anhand eines maschinenlesbaren Codes einer Kapsel ausgelesen werden. Sie können mit gespeicherten "fine tuning parameters", die auch entsprechend dem Code ausgelesen werden, modifiziert werden. Eine Modifikation der Zubereitungsparameter durch einen Benutzer ist nicht vorgesehen.

US 2015/201796 A1 zeigt einen Code auf einer Kaffeepackung, welcher selber Rezepte mit Zubereitungsparametern enthält oder den Zugriff auf lokal oder remote gespeicherte Rezepte definiert. Rezepte können durch Benutzer erstellt und modifiziert werden, wie dies geschieht, ist aber nicht detailliert beschrieben. Rezepte können entsprechend Luftdruck, Temperatur, Wasserqualität, Alter des Kaffees etc. automatisch angepasst werden. Gemäss einer Ausführungsform wird ein Benutzer bei der Bedienung angeleitet und kann eine Getränkemenge manuell eingeben. Ein Röster kann Rezepte definieren und an Kaffeemaschinen verteilen.

Es ist eine mögliche Aufgabe der Erfindung, eine Getränkezubereitungsmaschine, eine Getränkezubereitungsmaschine in Kombination mit einer Portionspackung, ein System mit einer Getränkezubereitungsmaschine, und ein Verfahren zum Betrieb einer Getränkezubereitungsmaschine zu schaffen, welche eine bessere Bestimmung von Parametern eines Zubereitungsverfahrens zulassen.

Eine weitere mögliche Aufgabe ist, eine solche Getränkezubereitungsmaschine, eine solche Getränkezubereitungsmaschine in Kombination mit einer Portionspackung, ein solches System und Verfahren zu schaffen, welche die Herstellung einer Vielfalt von Getränkevarianten ermöglichen, wobei Zubereitungsparameter möglichst gut an die Eigenschaften einer Getränkevariante und insbesondere an deren Ausgangsstoffe angepasst sind.

Mindestens eine dieser Aufgaben lösen eine Getränkezubereitungsmaschine, eine Getränkezubereitungsmaschine in Kombination mit einer Portionspackung, ein System und ein Verfahren gemäss den Patentansprüchen.

Das Verfahren dient gemäss einem anspruchsgemässen, ersten Aspekt der Erfindung, von dem nachfolgend mehrere Varianten beschrieben sind, zum Betrieb einer Getränkezubereitungsmaschine, zum Erzeugen eines Gesamtproduktes unter Verwendung einer Portionspackung, und gemäss einer Zubereitungsvorschrift. Es weist die folgenden Schritte auf:
- Erfassen eines Portionencodes einer Portionspackung mittels einer Portionenerkennungseinheit, typischerweise dann, wenn die Portionspackung in die Getränkezubereitungsmaschine eingelegt ist;
- Ermitteln von dem Portionencode zugeordneten und in der Getränkezubereitungsmaschine gespeicherten ersten Zubereitungsparametern der Zubereitungsvorschrift, und Ermitteln von zweiten Zubereitungsparametern der Zubereitungsvorschrift, wobei mindestens einer der ersten und/oder zweiten Zubereitungsparameter ein anpassbarer Zubereitungsparameter ist, und wenigstens ein Zubereitungsparameter nicht anpassbar ist;
- Erfassen einer Benutzereingabe zur Anpassung mindestens eines anpassbaren Zubereitungsparameters;
- Zubereitung des Gesamtproduktes gemäss der Zubereitungsvorschrift mit mindestens einem angepassten Zubereitungsparameter.

Diese Schritte müssen nicht zwingend in der obigen Reihenfolge ausgeführt werden. Beispielsweise kann das Erfassen einer Benutzereingabe vor dem Erfassen eines Portionencodes geschehen. So oder so erlaubt das Verfahren, produktspezifische Zubereitungsparameter vorzugeben, die durch die Art der Portionspackung definiert sind, und gleichwohl individuelle Vorgaben eines Benutzers bei der Getränkezubereitung zu berücksichtigen.

Gemäss einer Ausführungsform der Erfindung ist der wenigstens eine nicht anpassbare Zubereitungsparameter ein dem Portionencode zugeordneter und in der Getränkezubereitungsmaschine gespeicherter Zubereitungsparameter. Dabei kann es sich beispielsweise um Zubereitungsparameter handeln, die vom Hersteller der Portionspackungen für den jeweiligen Inhalt der Portionspackung optimiert worden sind.

Gemäss einer Variante des Verfahrens wird zum Erfassen der Benutzereingabe zur Anpassung des mindestens einen anpassbaren Zubereitungsparameters dem Benutzer auf einer Interfaceeinheit eine Auswahl eines oder mehrere solcher Zubereitungsparameter angezeigt, und wird eine Eingabe des Benutzers zur Anpassung des Zubereitungsparameters erfasst. Ein Wert für den anpassbaren Zubereitungsparameter kann - muss aber nicht - durch die dem Portionencode zugeordneten und in der Getränkezubereitungsmaschine gespeicherten ersten Zubereitungsparameter vorgegeben sein. Damit ist es möglich, dem Benutzer einen aktuellen oder vorgegebenen Wert des Benutzerparameters anzuzeigen, so dass der Benutzer entscheiden kann, ob er den Wert ändern will. Mit einer flexibel programmierbaren Interfaceeinheit, beispielsweise mit einem Bildschirm und insbesondere einem Touchscreen kann die Anzeige entsprechend der Anzahl und der Art der anpassbaren Zubereitungsparameter erzeugt werden.

Dabei kann die Interfaceeinheit eine Bedieneinheit der Getränkezubereitungsmaschine oder ein Benutzerinterface eines Bediengerätes, welches über eine Kommunikationsverbindung mit der Getränkezubereitungsmaschine verbunden ist, sein. Es kann also je nach Ausführungsform die Anpassung an der Getränkezubereitungsmaschine selber oder an einem abgesetzten, d.h. physisch von der Getränkezubereitungsmaschine getrennten aber mit der Getränkezubereitungsmaschine kommunizierenden Bediengerät geschehen.

Gemäss einer Variante des Verfahrens sind ein oder mehrere vom Benutzer angepasste Zubereitungsparameter (welche somit einen Satz von angepassten Zubereitungsparametern bilden) in der Getränkezubereitungsmaschine als Rezept speicherbar. Diese sind zu einem späteren Zeitpunkt zum Erfassen der Benutzereingabe zur Anpassung des mindestens einen anpassbaren Zubereitungsparameters wieder abrufbar. Bei diesem Abrufen wird also nicht mehr zwingend der mindestens eine anpassbare Zubereitungsparameter (also ggf. auch ein ganzer Satz von solchen) manuell durch den Benutzer angepasst, sondern es wird das gespeicherte Rezept abgerufen und der mindestens eine durch das Rezept spezifizierte anpassbare Zubereitungsparameter für die nächste Zubereitung vorgesehen. Anschliessend kann immer noch die Möglichkeit vorgesehen sein, dass einer oder mehrere oder so abgerufenen Zubereitungsparameter durch den Benutzer modifiziert werden kann.

Gemäss einer Variante des Verfahrens definiert der mindestens eine anpassbare Zubereitungsparameter eine Menge des Gesamtproduktes oder eine Menge eines von mehreren Teilprodukten, aus dem sich das Gesamtprodukt zusammensetzt.

Es können Zubereitungsparameter, beispielsweise solche, welche sich auf die Qualität der Produkte auswirken, nicht anpassbar sein. Anspruchsgemäss ist mindestens ein Zubereitungsparameter nicht anpassbar. Solche nicht anpassbaren Zubereitungsparameter sind beispielsweise Druck und Temperatur zum Betrieb einer Brüheinheit oder - je nach Gesamtprodukt - eine zeitliche Reihenfolge der Zubereitung von Teilprodukten.

Allgemein erlauben nicht anpassbare Zubereitungsparameter, zu verhindern, dass die Qualität der Produkte kompromittiert wird. Bei bestimmten Zubereitungsparametern gibt es keinen oder nur einen kleinen Spielraum, und zudem ist es für einen Benutzer ohne spezielle Kenntnisse beispielsweise schwer nachvollziehbar, welchen Einfluss in einer Kaffeemaschine eine Änderung einer Vorbrühzeit, der Wassertemperatur oder des Drucks auf das Ergebnis hat, und wie sich das je nach Kaffeesorte, Röstung und Mahlgrad auf das Endergebnis auswirkt. Lässt man dem Benutzer die Möglichkeit, sämtliche Zubereitungsparameter frei einzustellen, so ist er oft überfordert, und am Ende mit dem Getränk nicht zufrieden, ohne nachvollziehen zu können, welche Einstellung dazu geführt hat, dass das Ergebnis nicht seinen Erwartungen entspricht. Um das zu vermeiden, können bestimmte Zubereitungsparameter individuell für jede Kapselsorte festgelegt sein, und sind diese Zubereitungsparameter nicht anpassbar.

Gemäss einer Variante des Verfahrens ist die Getränkezubereitungsmaschine eine Kaffeemaschine, welche zur Zubereitung eines Gesamtproduktes mit einem ersten Anteil aus Kaffee als erstem Teilprodukt und einem zweiten Anteil aus Milch als zweitem Teilprodukt ausgebildet ist. Dabei definiert ein erster anpassbarer Zubereitungsparameter einen ersten Mengenanteil des ersten Anteils und ein zweiter anpassbarer Zubereitungsparameter einen zweiten Mengenanteil des zweiten Anteils.

Es kann das Gesamtprodukt auch einen dritten Anteil aus Milchschaum als drittem Teilprodukt aufweisen, mit einem dritten anpassbaren Zubereitungsparameter, der einen dritten Mengenanteil des dritten Anteils definiert. In diesem Fall weist die Getränkezubereitungsmaschine eine oder mehrere Zusatzeinheiten auf, welche zum Fördern von Milch und dem Erzeugen von Milchschaum ausgebildet sind.

Gemäss einer Variante des Verfahrens definieren weitere anpassbare Zubereitungsparameter mindestens eines von:
- einer Milchtemperatur;
- einer Behältergrösse oder ein Gesamtvolumen des Gesamtproduktes;
- einer Menge von Milchschaum;
- eines Mengenverhältnisses von Milch und Milchschaum;
- einer zeitlichen Reihenfolge, in welcher die Teilprodukte herzustellen sind. Wie bereits erwähnt, kann diese Reihenfolge aber unter Umständen auch ein nicht anpassbarer Zubereitungsparameter sein. Alternativ kann die Reihenfolge auch in Abhängigkeit von anderen anpassbaren Zubereitungsparametern automatisch bestimmt werden.

Damit ist es möglich, eine Vielzahl von Kaffeezubereitungsvarianten in einfacher Weise zu definieren und zubereiten zu lassen.

Gemäss einem nicht unabhängig beanspruchten zweiten Aspekt der Erfindung, der mit dem ersten Aspekt in allen seinen Varianten kombiniert realisiert werden kann, aber auch ohne den Schritt des Erfassens einer Benutzereingabe zur Anpassung des mindestens einen anpassbaren Zubereitungsparameters realisiert werden kann, definiert der Portionencode eine Portionenidentität, und ist in der Getränkezubereitungsmaschine eine Zuordnung von Portionenidentitäten jeweils zu ersten Zubereitungsparametern und/oder Zusatzinformation gespeichert, und werden die folgenden Schritte ausgeführt:
- Ermitteln, anhand der Portionenidentität einer Portionspackung, von zugeordneten ersten Zubereitungsparametern und/oder Zusatzinformation;
- falls keine zugeordneten ersten Zubereitungsparameter und/oder Zusatzinformation vorliegen, Darstellen einer Anzeige an den Benutzer mit einer Aufforderung, ein Herunterladen von aktualisierten ersten Zubereitungsparametern und/oder Zusatzinformationen durchzuführen oder zu ermöglichen.

Damit ist es möglich, einerseits identitätsspezifische (oder sortenspezifische) Informationen zu einer Portionspackung anzuzeigen, und im Falle dass solche Informationen - beispielsweise nach der Einführung von neuen Sorten - nicht in der Getränkezubereitungsmaschine gespeichert sind, diese Informationen zu beschaffen.

Gemäss einer Variante des Verfahrens nach dem ersten oder dem zweiten Aspekt definiert der Portionencode eine Portionenkategorie und eine Portionenidentität, und ist in der Getränkezubereitungsmaschine eine Zuordnung von Portionenkategorien und Portionenidentitäten jeweils zu ersten Zubereitungsparametern gespeichert. Dabei werden im Schritt des Ermittelns von dem Portionencode zugeordneten gespeicherten ersten Zubereitungsparametern der Zubereitungsvorschrift die folgenden Schritte ausgeführt:
- Ermitteln, anhand der Portionenidentität einer Portionspackung, von zugeordneten ersten Zubereitungsparametern;
- falls keine zugeordneten ersten Zubereitungsparameter gespeichert sind, Ermitteln von der Portionenkategorie zugeordneten ersten Zubereitungsparametern;
und werden die so ermittelten ersten Zubereitungsparameter in den weiteren Schritten verwendet.

Damit ist es möglich, falls keine identitätsspezifischen ersten Zubereitungsparameter zu einer (eingelegten) Portionspackung vorliegen, kategoriespezifische erste Zubereitungsparameter zu verwenden, welche vielleicht nicht ein optimales aber doch ein gutes Ergebnis liefern.

Falls eine Portionenkategorie und eine Portionenidentität vorliegen, kann die Portionenidentität abhängig oder unabhängig von der Portionenkategorie codiert sein. Im Fall der unabhängigen Codierung ist die Portionenkategorie durch eine von der Portionenidentität getrennte Informationseinheit (typischerweise eine Anzahl von Bits) definiert respektive codiert. Im Fall der abhängigen Codierung ist die Portionenidentität durch die Kombination einer entsprechenden Informationseinheit mit der Portionenkategorie definiert, d.h. ist die Informationseinheit - z.B. eine Bitfolge - in der die Portionenkategorie codiert ist, Bestandteil der Informationseinheit, in die Portionenidentität definiert ist. Es folgt für die abhängige Codierung, dass anhand der Portionenidentität die Portionenkategorie eindeutig bestimmbar ist.

Gemäss einer Variante des Verfahrens nach dem ersten oder dem zweiten Aspekt definiert der Portionencode eine Portionenkategorie, und in ist der Getränkezubereitungsmaschine eine Zuordnung von Portionenkategorien jeweils zu ersten Zubereitungsparametern gespeichert. Dabei wird im Schritt des Ermittelns von dem Portionencode zugeordneten gespeicherten ersten Zubereitungsparametern der Zubereitungsvorschrift der folgende Schritt ausgeführt:
- Ermitteln, anhand der Portionenkategorie einer Portionspackung, von zugeordneten ersten Zubereitungsparametern der Zubereitungsvorschrift;
und werden die so ermittelten ersten Zubereitungsparameter in den weiteren Schritten verwendet. Dabei kann eine Portionenidentität der Portionspackung verwendet werden, um die zugeordneten Zusatzinformationen zu ermitteln und anzuzeigen.

Damit ist es möglich, auch bei einer Vielzahl von verschiedenen Portionenidentitäten stets denselben begrenzten Satz von ersten Zubereitungsparametern entsprechend einer kleineren Zahl von Portionenkategorien zu verwenden.

Gemäss einer Variante des Verfahrens nach dem ersten oder dem zweiten Aspekt definiert der Portionencode eine Portionenkategorie und eine Portionenidentität, und ist in der Getränkezubereitungsmaschine mindestens eine der Portionenkategorien als Spezialkategorie gekennzeichnet und eine Zuordnung von Portionenidentitäten jeweils zu ersten Zubereitungsparametern gespeichert,
Dabei werden im Schritt des Ermittelns von dem Portionencode zugeordneten und gespeicherten ersten Zubereitungsparametern der Zubereitungsvorschrift die folgenden Schritte ausgeführt:
- Ermitteln, anhand der Portionenkategorie einer Portionspackung, ob diese der Spezialkategorie angehört;
- falls dies der Fall ist, ermitteln, anhand der Portionenidentität der Portionspackung, von zugeordneten ersten Zubereitungsparametern;
und die so ermittelten ersten Zubereitungsparameter werden in den weiteren Schritten verwendet.

Diese Variante kann in Kombination mit einer der beiden vorgenannten Varianten realisiert sein. Also können beispielsweise gemäss dieser Variante für einzelne Portionenkategorien aus der Spezialkategorie die ersten Zubereitungsparameter gemäss der Portionenidentität bestimmt werden, während für andere Portionenkategorien die ersten Zubereitungsparameter gemäss der Portionenkategorie bestimmt werden.

In weiteren Ausführungsformen liegt eine Mischform vor, gemäss welcher für eine erste Gruppe von Portionenkategorien die zugeordneten ersten Zubereitungsparameter nur von der jeweiligen Portionenkategorie abhängen, und für eine zweite Gruppe von Portionenkategorien die zugeordneten ersten Zubereitungsparameter auch von der jeweiligen Portionenidentität abhängen. Beispielsweise kann so für eine Kategorie von unterschiedlichen Kaffees immer derselbe Satz von ersten Zubereitungsparametern (Brühprofil) verwendet werden, aber für unterschiedliche Identitäten innerhalb einer Kategorie "Spezialkapseln" jeweils auch unterschiedliche erste Zubereitungsparameter. Solche Identitäten sind beispielsweise "Reinigungskapsel", "Entkalkungskapsel", "Servicekapsel", ... etc. und entsprechen insbesondere Kapseln, die nicht zur Zubereitung eines für den Verzehr bestimmten Produktes dienen.

Gemäss einer Variante des Verfahrens wird die Zubereitung nicht durchgeführt und wird optional eine Meldung angezeigt, wenn eine Portionenidentität und eine Portionenkategorie inkonsistent zueinander sind, insbesondere wenn die Portionenkategorie eine Spezialkategorie der Portion anzeigt, die nicht zum Verzehr geeignet ist (beispielsweise eine Spezialkapsel) und die Portionenidentität *nicht* zu dieser Kategorie passt.

Die Getränkezubereitungsmaschine ist zum Erzeugen eines Gesamtproduktes unter Verwendung einer Portionspackung und zur Durchführung des oben beschriebenen Verfahrens ausgebildet, wobei sie eine digitale Datenverarbeitungseinheit aufweist, die einen internen Speicher aufweist, in den ein Computerprogramm geladen ist, das Computerprogrammcodemittel aufweist, welche, wenn sie in der digitalen Datenverarbeitungseinheit der Getränkezubereitungsmaschine ausgeführt werden, diese zur Ausführung der für die Getränkezubereitungsmaschine vorgesehenen Schritte des Verfahrens bringen.

Die Getränkezubereitungsmaschine in Kombination mit einer Portionspackung ist zum Erzeugen eines Gesamtproduktes unter Verwendung der Portionspackung und zur Durchführung des oben beschriebenen Verfahrens ausgebildet.

Das System weist mindestens eine Getränkezubereitungsmaschine und eine Portionspackung auf, und dient zum Erzeugen eines Gesamtproduktes unter Verwendung der Portionspackung. Dabei ist das System zur Durchführung des oben beschriebenen Verfahrens ausgebildet, wobei die Getränkezubereitungsmaschine eine Getränkezubereitungsmaschine der oben beschriebenen Art ist.

In einer Ausführungsform weist das System ein von der Getränkezubereitungsmaschine getrenntes (also physisch getrenntes) Bediengerät auf, welches zum Erfassen der Benutzereingabe zur Anpassung des mindestens einen anpassbaren Zubereitungsparameters ausgebildet ist. Das Bediengerät ist beispielsweise ein Mobiltelefon oder Smartphone oder eine Smartwatch oder ein anders gearteter tragbarer Computer oder ein Gerät mit zumindest Eingabeelementen und Kommunikationsmitteln.

Ein Computerprogramm ist in einen internen Speicher einer digitalen Datenverarbeitungseinheit der Getränkezubereitungsmaschine ladbar und weist Computerprogrammcodemittel auf, welche, wenn sie in der digitalen Datenverarbeitungseinheit der Getränkezubereitungsmaschine ausgeführt werden, diese zur Ausführung der für die Getränkezubereitungsmaschine vorgesehenen Schritte des oben beschriebenen Verfahrens bringen. Ein Computerprogrammprodukt weist einen Datenträger, respektive ein computerlesbares Medium auf, auf welchem die Computerprogrammcodemittel gespeichert sind.

Weitere Ausführungsformen gehen aus den abhängigen Patentansprüchen hervor. Dabei sind Merkmale der Verfahrensansprüche sinngemäss mit den System- und Computerprogrammansprüchen kombinierbar und umgekehrt.

Im folgenden wird der Erfindungsgegenstand anhand von Ausführungsbeispielen, welche in den beiliegenden Zeichnungen dargestellt sind, näher erläutert. Es zeigen jeweils schematisch:
- Figur 1: ein System zur Getränkezubereitung;
- Figur 2-4: beispielhafte Anzeigen auf einer Interfaceeinheit zur Zubereitung eines Produktes; und
- Figur 5: bei der Bestimmung von Zubereitungsparametern verwendete Daten.

Grundsätzlich sind in den Figuren gleiche Teile mit gleichen Bezugszeichen versehen.

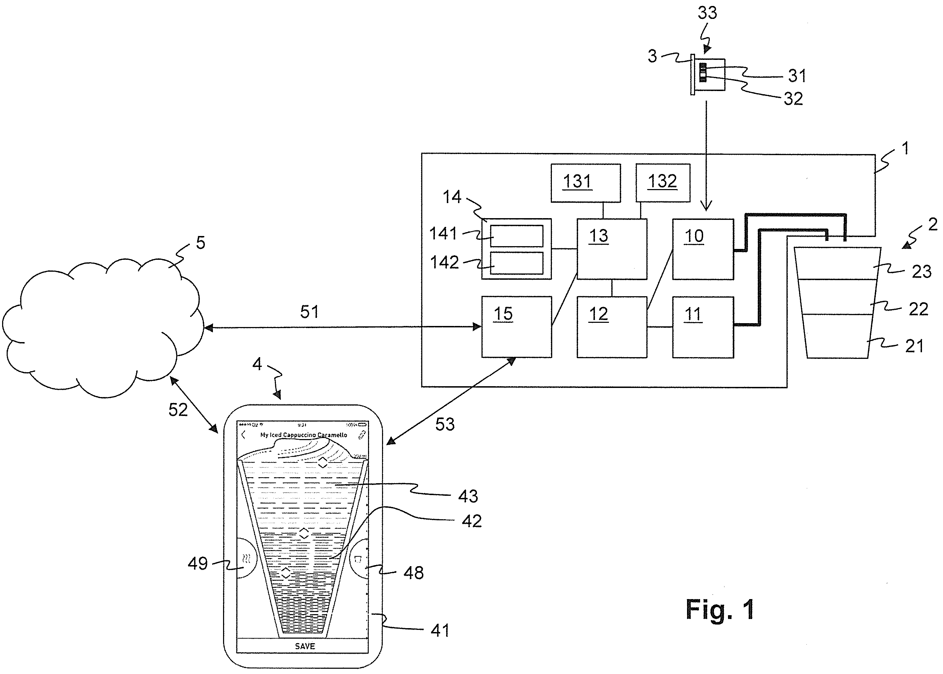

**Figur 1** zeigt ein **System** zur Getränkezubereitung mit einer Getränkezubereitungsmaschine 1 zum Befüllen eines Behälters 2 mit mindestens einem Extraktionsgut aus einer Portionspackung 3. Die Getränkezubereitungsmaschine 1 kann über eine erste Kommunikationsverbindung 51 mit einem Kommunikationsnetzwerk 5 wie einem Intranet oder dem Internet verbunden sein. Ein Bediengerät 4, welches mobil und tragbar sein kann, beispielsweise ein Mobiltelefon oder Smartphone, oder ein dediziertes Gerät welches nur zur Bedienung der Getränkezubereitungsmaschine 1 vorgesehen ist, kann indirekt über eine zweite Kommunikationsverbindung 52 und das Kommunikationsnetzwerk 5 oder direkt über eine dritte Kommunikationsverbindung 53 mit der Getränkezubereitungsmaschine 1 kommunizieren.

Die Getränkezubereitungsmaschine 1 weist eine **Grundeinheit** 10 zum Extrahieren eines **Extraktionsprodukts** mittels einer Extraktionsflüssigkeit auf. Die Getränkezubereitungsmaschine 1 ist beispielsweise eine Portionskapsel-Kaffeemaschine an sich bekannter Art, wobei die Grundeinheit 10 ein Brühmodul und die Extraktionsflüssigkeit heisses und unter Druck stehendes Wasser ist. Das Extraktionsprodukt wird dem Behälter 2 zugeführt.

Die **Portionspackung** 3 weist eine Portionsverpackung (bspw. Kapsel) und ein in der Portionsverpackung enthaltenes Extraktionsgut (bspw. Kaffee) auf.

Die Portionspackung 3 ist mit einem maschinenlesbaren **Portionencode** 33 versehen. Dieser kann durch beispielsweise optisch, mechanisch oder drahtlos über Funk lesbare Informationsträger realisiert sein, oder durch eine Kombination von zwei oder mehr solcher Informationsträger. Der Portionencode 33 repräsentiert eine Portionenkategorie 31, welche eine Kategorie spezifiziert, welcher die Portionspackung 3 zugeordnet ist. Solche Kategorien können verschiedene Kategorien von Getränken oder Produkten sein, wie "Espresso", "Normalkaffee", "Filterkaffee", "Tee", und auch "Spezialkapsel". Der Portionencode 33 repräsentiert ferner eine Portionenidentität 32, welcher die Portionspackung 3 zugeordnet ist. Solche Identitäten können bestimmte Einzelprodukte oder Sorten repräsentieren, wie "Arabica Nr. 42" oder "Colombia special". Portionspackungen 3 mit derselben Portionenkategorie 31 können unterschiedliche Portionenidentitäten 32 aufweisen. Mittels der Portionenkategorie 31 können also Portionspackungen 3 respektive entsprechende Produkte unterschiedlicher Identität zu Kategorien gruppiert werden. Die Verwendung von Kategorien erlaubt es, Produkte zuzubereiten, deren Identität zum Zeitpunkt der Auslieferung einer Getränkezubereitungsmaschine (und ohne Softwareaktualisierung) noch nicht bekannt ist. Dazu kann, wie weiter unten noch ausführlicher beschrieben ist, die Zubereitung - in jedem Fall oder nur bei unbekannter Identität - entsprechend der Kategorie eines Produktes durchgeführt werden.

Der Portionencode 33 kann durch eine mehrfach redundant codierte Repräsentation codiert sein, allgemein als optischer Code, beispielsweise als zehnfach redundanter optischer Code, beispielsweise ein ein- oder zweidimensionaler Barcode oder ein Code wie in den europäischen Patentanmeldungen EP 14 197 487.3 vom 11.12.2014 und EP 14 197 488.1 vom 11.12.2014 beschrieben. In einer Ausführungsform enthält der Portionencode 33 sechzehn Bits, wovon sechs als Prüfbits dienen, vier oder fünf zur Codierung der Portionenkategorie 31, und sechs oder fünf zur Codierung der Portionenidentität 32.

Dabei kann die Portionenidentität entweder abhängig von der Portionenkategorie codiert sein, oder aber unabhängig. Im Fall der unabhängigen Codierung ist die Portionenidentität durch eine Untermenge des Portionencodes, beispielsweise (gemäss dem oben begonnenen Beispiel) sechs oder fünf Bits definiert, es sind also 64 respektive 32 Portionenidentitäten darstellbar. Nachteil ist dabei, dass nicht jede Kombination von Portionenidentitäten und -Kategorien Sinn macht und somit viele an sich denkbare Portionencodes nicht genutzt werden. Im Fall der abhängigen Codierung ist die Portionenidentität durch die Gesamtheit des Portionencodes codiert, also durch Kombination der Bits, welche nur der Portionenidentität zugeordnet sind, mit den Bits, welche die Portionenkategorie codieren. Damit sind im vorliegenden Beispiel 1024 verschiedene Portionenidentitäten darstellbar.

Diese Portionenidentitäten sind einer Anzahl (gemäss dem Beispiel 16 oder 32) von Portionenkategorien zugeordnet, wobei umgekehrt jeder Portionenkategorie mehrere Portionenidentitäten zugeordnet sind. Aus Sicherheitsgründen kann einer bestimmten Portionenkategorie (beispielsweise Spezialkapseln, also nicht zum Verzehr geeignet), genau eine Portionenidentität als zulässig zugeordnet sein. Alle anderen Bitkombinationen, die zwar diese bestimmte Portionenkategorie codieren aber nicht diese genau eine Portionenidentität, führen dazu, dass keine Zubereitung durchgeführt wird und lösen eine Warnanzeige aus.

Die Getränkezubereitungsmaschine 1 weist eine **Zusatzeinheit** 11 auf, welche mindestens ein weiteres **Produkt** oder **Teilprodukt** fördern oder erzeugen kann, beispielsweise Milch und/oder Milchschaum, welche ebenfalls dem Behälter 2 zugeführt werden. Die Zusatzeinheit 11 kann Heizelemente und/oder Kühlelemente zum Aufheizen oder Abkühlen des mindestens einen weiteren Produktes aufweisen.

Das Extraktionsprodukt und das mindestens eine Teilprodukt werden gleichzeitig oder sequentiell dem Behälter 2 zugeführt und bilden zusammen im Behälter 2 ein Gesamtprodukt, beispielsweise einen "Caffe Macchiato" bestehend aus Kaffee, kalter oder warmer Milch, und Milchschaum. Ein Gesamtprodukt ist schematisch als bestehend aus einem ersten Anteil 21, einem zweiten Anteil 22 und einem dritten Anteil 23 bestehend dargestellt. Die Anteile können je nach Zubereitungsvorschrift im Behälter 2 übereinander geschichtet oder gemischt sein. Unter "Anteil" wird ein Volumenanteil oder Mengenanteil verstanden.

Die Getränkezubereitungsmaschine 1 weist zur Steuerung der Grundeinheit 10 und der Zusatzeinheit 11, zur Bedienung durch einem Benutzer und zur optionalen Kommunikation mit anderen Geräten eine Steuereinheit 12, eine übergeordnete Steuereinheit 13, eine Bedieneinheit 14 und eine Kommunikationseinheit 15 auf.

Die **Steuereinheit** 12 ist zur Ansteuerung der Grundeinheit 10 und Zusatzeinheit 11 eingerichtet, beispielsweise indem sie die Pumpen Ventile, Heizelemente etc. dieser Einheiten ansteuert und Messwerte von Temperaturen, Drücken, Durchfluss etc. erfasst und verarbeitet. Die Funktion der Steuereinheit 12 kann durch eine einzige physische elektronische Einheit, beispielsweise einen Mikrokontroller, realisiert werden, oder durch mehrere physikalische Einheiten oder Mikrokontroller, welche jeweils der Grundeinheit 10 und der Zusatzeinheit 11 zugeordnet sind und miteinander über einen Kommunikationsbus kommunizieren oder über Signalleitungen einzelne analoge oder binäre Signale übermitteln.

Die **übergeordnete Steuereinheit** 13 ist zur Ansteuerung der Bedieneinheit 14 und er Kommunikationseinheit 15 eingerichtet. Die übergeordnete Steuereinheit 13 kann physikalisch und/oder programmtechnisch getrennt von der Steuereinheit 12 realisiert sein, oder aber zusammen mit der Steuereinheit 12 eine einzige Einheit bilden. In diesem Sinne können gemäss Ausführungsformen die Steuereinheit 12 und die übergeordnete Steuereinheit 13 identisch sein.

Die übergeordnete Steuereinheit 13 ist dazu eingerichtet, von einer Kapselerkennungseinheit 132 den maschinenlesbaren Portionencode 33 einer Portionspackung 3 zu empfangen. Die Kapselerkennung 132 weist eine optische, mechanische und/oder drahtlose respektive funkbasierte Leseeinrichtung zum Lesen des Portionencodes 33 auf, insbesondere wenn die Portionspackung in die Getränkezubereitungsmaschine 1 eingelegt ist.

Die **Bedieneinheit** 14 weist eine Eingabeeinheit 141, mit beispielsweise Schaltern, Tastern, Drehknöpfen, Dreh/Drückknöpfen etc. und/oder einer berührungsempfindlichen Fläche auf, sowie eine Ausgabeeinheit 142 mit optischen Anzeigemitteln wie Leuchten oder einem Bildschirm etc. und/oder akustischen Anzeigemitteln wie einem Lautsprecher, Summer, etc..

Die **Kommunikationseinheit** 15 ist zur Kommunikation über die erste Kommunikationsverbindung 51, die drahtlos (beispielsweise mittels WiFi respektive WLAN, Bluetooth, etc.) oder drahtgebunden (beispielsweise mittels Ethernet, USB) sein kann, eingerichtet, insbesondere zur Kommunikation mit dem Kommunikationsnetzwerk 5. Ferner kann die Kommunikationseinheit 15 drahtlos (beispielsweise mittels WiFi respektive WLAN, Bluetooth, NFC, etc.) oder drahtgebunden (beispielsweise mittels USB) über die dritte Kommunikationsverbindung 53 mit dem Bediengerät 4 kommunizieren. Die Kommunikationseinheit 15 kann auch zum Auslesen und Beschreiben eines entfernbaren portablen Datenträgers eingerichtet sein, beispielsweise über eine USB-Schnittstelle oder SD-Kartenschnittstelle.

Das **Bediengerät** 4, typischerweise ein Mobiltelefon oder Smartphone, weist ein Benutzerinterface 44 auf, beispielsweise einen berührungsempfindlichen Bildschirm oder Touchscreen, welcher als Ein- und Ausgabeeinheit funktioniert. Zusätzlich oder alternativ können auch Taster und/oder eine Hard- und Software zur Spracheingabe des Bediengerätes 4 als Eingabeeinheiten dienen. Das Bediengerät 4 kann über die zweite Kommunikationsverbindung 52, typischerweise über WiFi respektive ein WLAN oder über eine mobilfunkbasierte Datenverbindung (wie GPRS, UMTS, LTE) mit dem Kommunikationsnetzwerk 5 kommunizieren. Das Bediengerät 4 kann somit auch als temporärer WiFi-Hotspot zur Verbindung der Getränkezubereitungsmaschine 1 mit dem Kommunikationsnetzwerk 5 dienen.

Wo nicht anders erwähnt, können Informationen an den Benutzer und Eingaben des Benutzers über die Bedieneinheit 14 und/oder das Bediengerät 4 ausgegeben respektive eingegeben werden. Wenn in der vorliegenden Beschreibung also Interaktionen mit dem Benutzer beschrieben sind, versteht sich, dass damit Ausgaben respektive Eingaben mittels der Bedieneinheit 14 und/oder mittels des Bediengerätes 4 gemeint sind. Verallgemeinert können diese daher als Interfaceeinheit bezeichnet werden.

Die übergeordnete Steuereinheit 13 weist einen Speicher 131 auf, in welchem unter anderem **Zubereitungsvorschriften** gespeichert sind. Eine Zubereitungsvorschrift weist mindestens **Steuerinformationen** auf, die in Befehle zur Steuerung der Grundeinheit 10 und der Zusatzeinheit 11 umgesetzt werden können. Solche Steuerinformationen weisen einerseits **Ablaufinformationen** auf, welche einen Ablauf von Schritten spezifizieren, die durch die Grundeinheit 10 und/oder die Zusatzeinheit 11 zum Erzeugen eines Gesamtprodukte auszuführen sind. Andererseits weisen die Steuerinformationen beispielsweise Temperaturen, Volumenangaben, Zeitangaben, etc. auf - im Folgenden allgemein auch **Zubereitungsparameter** genannt - welche einen Ablauf parametrisieren.

Ablaufinformationen repräsentieren beispielsweise "Heizung der Zusatzeinheit einschalten; Pumpe des Brühmoduls während fünfzehn Sekunden einschalten; nach Abschalten der Pumpe mindestens fünf Sekunden warten bis Heizung auf Solltemperatur ist; Milchpumpe während zwölf Sekunden einschalten". Die in diesem Beispiel erwähnten Zeiten und Temperaturen können durch Zubereitungsparameter spezifiziert sein und/oder durch die Steuerung nach Massgabe von andern Zubereitungsparametern und Sensormesswerten bestimmt werden.

Beispiele von Zubereitungsparametern für die Grundeinheit 10 für die Kaffeezubereitung sind die folgenden. Dabei wird von einem optional zweistufigen Brühvorgang mit Vorbrühen und Brühen ausgegangen. Es kann auch nur eine Untermenge dieser Parameter vorliegen. Ein Satz solcher Parameter kann "Brühprofil" genannt werden.
- Vorheiztemperatur des Boilers: Temperatur, die vor dem Vorbrühen erreicht sein muss. Z.B. 80°C für Kaffee, 90°C für Espresso.
- Verzögerungszeit zwischen Vorheizung und Start der Pumpe. z.B auch Null.
- Vorbrühmenge: Wassermenge bis zu einer Brühpause. Z.B. 20 ml.
- Brühpause: Zeit zwischen Vorbrühen und Brühen. Z.B. Null oder 5 Sek.
- Brühtemperatur. Z.B. 82°C für Kaffee, 85°C für Espresso.
- Brühmenge: Wassermenge für das Getränk abzüglich Vorbrühmenge. Z.B. 110 ml für Kaffee, 25 ml für Espresso.
- Kühlwassermenge: Wassermenge am Ende der Brühung mit abgeschalteter Heizung. Z.B. 10 ml.
- Wartezeit bis zur Öffnung eines Druckentlastungsventils zu einem Auslauf. Z.B. 3 Sek.
- Öffnungszeit eines Druckentlastungsventils. Z.B. 5 Sek.
- Durchflussmenge jeweils für Vorbrühen, Brühen und Kühlen, falls eine Durchflussregelung der Pumpe vorliegt.
- Ein/Aus einer Antiblockier-Funktion.
- Ein/Aus einer Nachspülung.

Ein solches Brühprofil kann auch zum Zubereiten von Tee oder einem anderen Getränk oder zum Anwenden einer Spezialkapsel vorgesehen sein und dazu entsprechende Parameter aufweisen.

Die genannte Antiblockier-Funktion, wenn sie aktiv ist, reagiert wenn der Durchfluss unter einen gewissen Schwellwert sinkt. Es wird dann automatisch temporär der Pumpendruck reduziert. Grund dafür ist, dass beim Sinken des Durchflusses ein Verstopfen der Extraktionsdornen vermutet wird. Das vorübergehende Reduzieren des Pumpendruckes soll die Verstopfung beseitigen. Dies im Gegensatz dazu, dass nur bei geringerem Durchfluss einfach nur der Pumpendruck erhöht wird, um wieder auf einen Soll-Durchfluss zu kommen. Eine detaillierte Beschreibung dazu findet sich in der Patentanmeldung EP 14169279.8 vom 21. Mai 2014.

Eine Zubereitungsvorschrift kann auch **Benutzeranweisungen** enthalten. Diese Anweisungen sind Teil der Zubereitung des Gesamtproduktes und müssen durch einen Benutzer ausgeführt werden. Dazu können die Benutzeranweisungen mittels der Ausgabeeinheit 142 oder des Benutzerinterface 44 des Bediengerätes 4 angezeigt werden. Beispielsweise sind solche Benutzeranweisungen "Jetzt Eiswürfel hinzufügen" oder "Bitte 20ml Karamelsirup abmessen" oder "Jetzt den vorbereiteten Karamelsirup hinzufügen" oder "Bitte umrühren" etc.

**Zur Zubereitung eines Produktes** werden entsprechend der Zubereitungsvorschrift Steuerinformationen respektive entsprechende Befehle durch die Grundeinheit 10 und Zusatzeinheit 11 umgesetzt und damit ein Zubereitungsablauf realisiert. Falls Zubereitungsvorschrift Benutzeranweisungen aufweist, werden diese an entsprechenden Stellen des Ablaufs dem Benutzer angezeigt. Nach einer Quittierung durch den Benutzer mittels der Eingabeeinheit 141 oder dem Benutzerinterface 44, welche dem System die Ausführung der Benutzeranweisung bestätigt, werden nachfolgende Steuerinformationen des Zubereitungsablaufs umgesetzt.

Die Umsetzung der Steuerinformationen und der darin enthaltenen Zubereitungsparameter in gerätespezifische Steuerwerte für die Steuerung, wie Pumpendrehzahl, Pumpzeiten, Ventilöffnungszeiten, Heizleistung etc. geschieht durch die Steuereinheit 12 oder durch die übergeordnete Steuereinheit 13 und/oder in lokalen Steuereinheiten der Grundeinheit 10 respektive der Zusatzeinheit 11. Dabei können Funktionen oder Tabellen zur Bestimmung der gerätespezifischen Steuerwerte aus den Steuerinformationen implementiert sein.

Eine Zubereitungsvorschrift kann Zubereitungsparameter aufweisen, die durch den Benutzer angepasst werden dürfen, sowie Zubereitungsparameter, die nicht durch den Benutzer anpassbar sind und/oder Zubereitungsparameter, die sich in Abhängigkeit von den von einem Benutzer gewählten Werten für andere Zubereitungsparameter verändern, aber sich nicht direkt verändern lassen **Anpassbare Zubereitungsparameter** sind beispielsweise (Volumen)Anteile von Teilprodukten im Gesamtprodukt, eine Gesamtmenge, oder die Temperatur eines Teilproduktes. Weiter kann auch eine Reihenfolge der Zubereitung von Teilprodukten spezifizierbar sein, oder dass bestimmte Teilprodukte gleichzeitig zubereitet und dem Behälter 2 zugeführt werden. Die Reihenfolge kann auch in Abhängigkeit von anderen Parametern automatisch festgelegt werden. So kann beispielsweise bei Getränken mit kalter Milch (Eiskaffee) immer zunächst der Kaffee ausgegeben werden, damit er in der Tasse abkühlen kann. Ebenso kann auch bei Getränken mit Milchschaum der Milchschaum aus ästhetischen Gründen immer nach dem Kaffee ausgegeben werden. Für anpassbare Zubereitungsparameter enthält die Zubereitungsvorschrift einen Standardwert oder Defaultwert, welcher verwendet wird, wenn der Benutzer den Parameter nicht anpasst. Die Gesamtheit der anpassbaren Zubereitungsparameter wird im Folgenden auch "Rezept" genannt.

Nicht anpassbare Zubereitungsparameter können beispielsweise Brühparameter sein wie eine Wassertemperatur, eine Brühzeit, oder ein Druck. Diese Brühparameter können vom Hersteller der Portionspackungen für den jeweiligen Inhalt der Portionspackung optimiert sein. In diesem Fall handelt es sich dann bei den nicht anpassbaren Zubereitungsparametern um dem Portionencode 33 zugeordnete und in der Getränkezubereitungsmaschine 1 gespeicherte erste Zubereitungsparameter der Zubereitungsvorschrift.

Bei der Zubereitung eines kaffeebasierten Getränkes sind anpassbare Zubereitungsparameter beispielsweise die Menge an Kaffee (insbesondere über die oben definierte Brühmenge), die Menge an Milch und/oder Milchschaum, eine Milchtemperatur und/oder auch hier die Behältergrösse respektive Gesamtmenge sowie die Reihenfolge der Herstellung und Abgabe in den Behälter 2. Die Milchtemperatur kann entweder nur als "warm" oder "kalt" spezifiziert sein, oder feiner abgestuft, beispielsweise durch eine Temperaturangabe.

Zur Anpassung von anpassbaren Zubereitungsparametern wird dem Benutzer auf der Bedieneinheit 14 der Getränkezubereitungsmaschine 1 oder dem Benutzerinterface 44 des Bediengerätes 4 eine Auswahl eines oder mehrere solcher Zubereitungsparameter angezeigt und wird eine Eingabe des Benutzers zur Anpassung des Zubereitungsparameters erfasst. Die Eingabe kann durch Betätigen von realen Tastern und/oder von virtuellen Tastern wie Schaltflächen oder "Buttons", insbesondere "Pfeiltasten" und/oder von verschiebbaren Markierungen oder "Slider" auf einem Touchscreen der Bedieneinheit 14 oder des Bediengerätes 4 erfolgen.

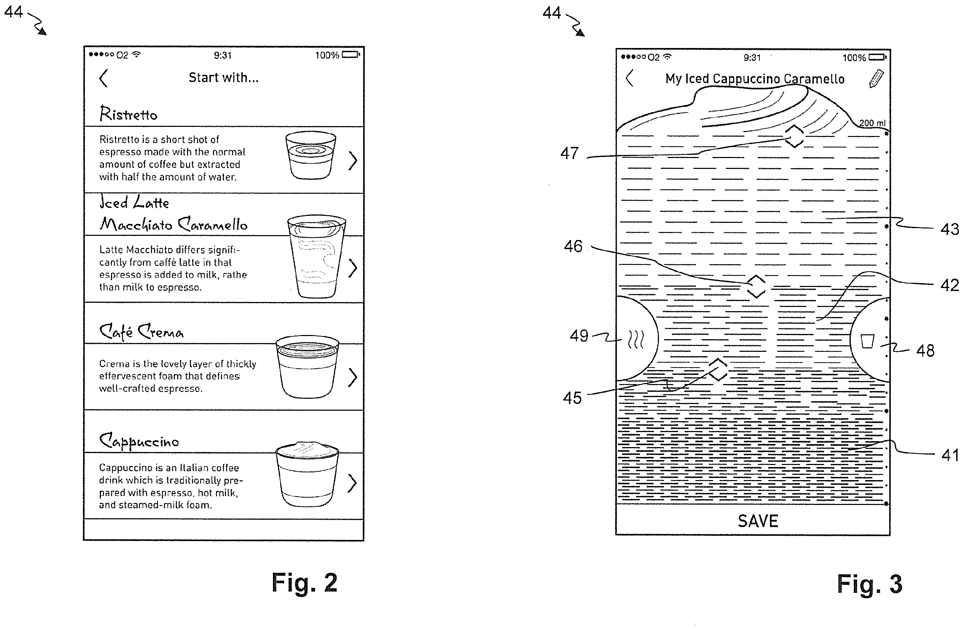

Grundsätzlich können alle Arten von Parametern in dieser Weise angepasst werden. Im Folgenden wird die Anpassung von Anteilen von Teilprodukten an einem Gesamtprodukt beschrieben. Gemäss der in **Figur 1** gezeigten Darstellung geschieht die Eingabe durch Verschieben von Markierungen, im Folgenden Einstellsymbole 45, 46, 47 genannt, auf einem Bildschirm, insbesondere einem Touchscreen des Bediengerätes 4 oder der Bedieneinheit 14. Dabei werden die Einstellsymbole 45, 46, 47 auf einer symbolischen Darstellung des Gesamtproduktes mit den Teilprodukten dargestellt. Es kann dabei ein Behälter 2 im Querschnitt dargestellt werden (wie in der **Figur 1**)**,** oder es kann die gesamte Breite des Bildschirms mit einer Darstellung der Teilprodukte ausgefüllt sein (siehe **Figur 3**).
- Diese Darstellung kann so skaliert sein, dass ungeachtet der zu produzierenden Gesamtmenge des Gesamtproduktes (idealerweise entsprechend der Grösse respektive dem Volumen eines gewählten Behälters 2) in der Darstellung die Gesamtmenge stets mit derselben Grösse dargestellt wird. Die Darstellung gibt in diesem Fall nur eine Aussage über die relativen Anteile der Teilprodukte am Gesamtprodukt.
- Diese Darstellung kann alternativ so skaliert sein, dass die dargestellte Gesamtmenge proportional zu der zu produzierenden Gesamtmenge des Gesamtproduktes dargestellt wird. Die Darstellung gibt in diesem Fall eine Aussage über die absolute Menge der Teilprodukte und des Gesamtprodukts.

Eine gegenseitige Lage der Einstellsymbole entlang einer linearen Achse repräsentiert den Anteil respektive die Menge oder einen Füllstand von Teilprodukten am Gesamtprodukt. Im gezeigten Beispiel ist eine vertikale Schichtung der Teilprodukte im Behälter 2 angezeigt. Dabei repräsentiert eine erste Anteilsanzeige 41 den Anteil eines ersten Teilprodukts und kann dieser Anteil auf dem Touchscreen durch Verschieben eines ersten Einstellsymboles 45 durch den Benutzer angepasst werden. Beispielsweise ist das erste Teilprodukt Kaffee. Analog repräsentieren eine zweite Anteilsanzeige 42 mit einem zweiten Einstellsymbol 46 und eine dritte Anteilsanzeige 43 mit einem dritten Einstellsymbol 47 als weitere Teilprodukte Milch und Milchschaum. Falls kein Touchscreen vorliegt, können die Einstellsymbole durch Taster oder andere Eingabeelemente angepasst werden.

Weitere Elemente zur Anpassung von Zubereitungsparametern sind ein Behälterwahlsymbol 48 und ein Temperaturwahlsymbol 49. Bei aktiviertem Behälterwahlsymbol 48, beispielsweise nach Berühren des Behälterwahlsymbols 48, wird eine Auswahl von Behältern mit verschiedenen Volumina angezeigt und ist eine Wahl des Benutzers erfassbar. In analoger Weise ist bei aktiviertem Temperaturwahlsymbol 49 die Wahl einer Temperatur eines der Teilprodukte, hier Milch, erfassbar.

Das Bediengerät 4 übermittelt Informationen, welche die erfassten Benutzereingaben wie Mengenanteile, Wahl des Behälters oder Gesamtmenge, Temperaturwahl, Zubereitungsreihenfolge etc. repräsentieren, direkt über die dritte Kommunikationsverbindung 53 oder indirekt über die zweite Kommunikationsverbindung 52 und die erste Kommunikationsverbindung 51 an die Getränkezubereitungsmaschine 1.

Einzelne oder alle Parameter von Zubereitungsvorschriften können jeweils einer Portionenkategorie 31 und/oder einer Portionenidentität 32 zugeordnet sein. Diese Parameter, oder ein Satz von solchen Parametern, werden hier auch "erste Zubereitungsparameter" genannt. Eine Zuordnung kann durch einen Eintrag in einer Zuordnungstabelle - oder einer computertechnisch äquivalenten Realisierung - geschehen, in welcher Portionenkategorien 31 und Portionenidentitäten 32 gespeichert sind, und jeder gespeicherten Portionenkategorie 31 und/oder Portionenidentität 32 erste Zubereitungsparameter zugeordnet sind.

Die ersten Zubereitungsparameter und die Zuordnungstabelle sind in der Getränkezubereitungsmaschine 1 respektive deren übergeordneter Steuereinheit 13 gespeichert. Die übergeordnete Steuereinheit 13 kann dazu eingerichtet sein, mittels der Kommunikationseinheit 15 über eine der Kommunikationsverbindungen 51, 53 oder von einem entfernbaren portablen Datenträger weitere erste Zubereitungsparameter und Zuordnungen zu laden und die gespeicherten entsprechend zu ergänzen oder zu modifizieren und damit zu aktualisieren. Dabei kann vorgesehen sein, dass bestimmte Zubereitungsparameter grundsätzlich nicht modifizierbar sind, und damit nicht manipulierbar sind. Damit kann verhindert werden, dass beispielsweise ein Temperatursollwert einer Heizung auf schädlich hohe Werte gesetzt wird.

Um die Zubereitung eines Produktes oder Gesamtproduktes zu steuern, werden die Portionenkategorie 31 und die Portionenidentität 32 einer eingelegten Portionspackung 3 gelesen. Falls die Zuordnungstabelle der Portionenidentität 32 zugeordnete erste Zubereitungsparameter aufweist, werden diese verwendet. Falls nicht, so werden der Portionenkategorie 31 zugeordnete erste Zubereitungsparameter verwendet. Damit wird erreicht, dass bei der Einführung von neuen Produkten mit neuen Portionenidentitäten 32, welche bei einer älteren Getränkezubereitungsmaschine 1 noch nicht bekannt sind oder noch nicht aktualisiert wurden, anhand der Portionenkategorie 31 doch noch eine sinnvolle, wenn auch nicht optimal angepasste Zubereitung stattfinden kann. Beispielsweise kann dafür gesorgt werden, dass die Portionenkategorie 31 der Portionspackungen 3 stets eine ist von "Kaffee", "Espresso" und "Spezialkapsel", und dass in jeder Getränkezubereitungsmaschine 1 stets entsprechende erste Zubereitungsparameter und damit eine brauchbare Zubereitungsvorschrift für jede dieser drei Kategorien gespeichert sind.

Mit anderen Worten kann für jede vorgesehene Portionenkategorie 31 ein gespeichertes Brühprofil (als Satz von ersten Zubereitungsparametern) vorliegen, welches zur Anwendung kommt, wenn bei einer eingelegten Portionspackung 3 nur die Portionenkategorie 31 und nicht die Portionenidentität 32 ein in der Getränkezubereitungsmaschine 1 gespeichertes zugeordnetes Brühprofil aufweist.

Alternativ kann die Zubereitung in jedem Fall anhand der Portionenkategorie 31 geschehen, und die Portionenidentität 32 nur verwendet werden, um Zusatzinformationen über die Portionenidentität 32, also eine bestimmte Produktesorte, an der Bedieneinheit 14 und/oder am Bediengerät 4 anzuzeigen. Solche Zusatzinformationen betreffen beispielsweise Produktename, Zubereitungsempfehlungen, Herkunft und Geschmack der Produktesorte.

Die Zusatzinformationen und deren Zuordnung zu Portionenidentitäten 32, beispielsweise mittels eine weiteren Zuordnungstabelle, sind in der Getränkezubereitungsmaschine 1 respektive deren übergeordneter Steuereinheit 13 gespeichert. Die übergeordnete Steuereinheit 13 kann dazu eingerichtet sein, mittels der Kommunikationseinheit 15 über eine der Kommunikationsverbindungen 51, 53 oder von einem entfernbaren portablen Datenträger weitere Zusatzinformationen und Zuordnungen zu laden und die gespeicherten entsprechend zu ergänzen oder zu modifizieren und damit zu aktualisieren.

Wenn eine Portionenidentität 32 in der Getränkezubereitungsmaschine 1 nicht bekannt ist, kann eine der Portionenkategorie 31 entsprechende Anzeige an der Bedieneinheit 14 oder dem Bediengerät 4 angezeigt werden, beispielsweise "Kaffeekapsel" oder "Espressokapsel", und der Benutzer dazu aufgefordert werden, die Getränkezubereitungsmaschine 1 zu aktualisieren.

Beim Aktualisieren werden ganze Zubereitungsvorschriften, erste Zubereitungsparameter, Zusatzinformationen und deren Zuordnungen zu Portionenidentitäten 32, zusammenfassend Updateinformationen genannt, in die Getränkezubereitungsmaschine 1 geladen. Dies kann geschehen, indem der Benutzer eine Verbindung zwischen der Getränkezubereitungsmaschine 1 und dem Kommunikationsnetzwerk 5 herstellt. Dies wiederum kann geschehen, indem die erste Kommunikationsverbindung 51 hergestellt wird, beispielsweise durch Einrichtung einer WiFi oder WLAN-Verbindung zur Getränkezubereitungsmaschine 1. Dann kann die Kommunikationseinheit 15 die Updateinformationen von einem Server des Herstellers herunterladen. Alternativ können die Updateinformationen durch das Bediengerät 4 über eine mobile Datenverbindung entsprechend der zweiten Kommunikationsverbindung 52 vom Kommunikationsnetzwerk 5 heruntergeladen werden und in einem zweiten Schritt über die dritte Kommunikationsverbindung 53 der Getränkezubereitungsmaschine 1 übermittelt werden. Dies hat den Vorteil, dass keine direkte Verbindung der Kommunikationseinheit 15 zum Internet und damit eine Verletzbarkeit durch Hacker vorliegt.

Ein beispielhafter Ablauf der Zubereitung eines Getränkes ist der Folgende:
1. Der Benutzer legt eine Portionspackung 3 in die Getränkezubereitungsmaschine 1 ein, wo der Portionencode 33 von der Kapselerkennungseinheit 132 lesbar ist.
2. Die Kapselerkennung wird durchgeführt.
3. Nachdem die Kapselerkennungseinheit 132 den Portionencode 33 dekodiert hat, sendet Sie die dekodierte Portionenkategorie 31 (Brühprofilcode) und die Portionenidentität 32 (Artikelnummer) an die Steuereinheit 12.
4. Der Benutzer wählt auf dem Bediengerät 4 ein Rezept aus oder konfiguriert ein neues Rezept
   - Zum Konfigurieren eines neuen Rezeptes, beispielsweise nach einem am Bediengerät 4 ausgelösten Menuebefehl "neues Rezept erstellen", wird optional eine Darstellung gemäss **Figur 2** zur Auswahl eines zu modifizierenden Rezepts angezeigt, dann gemäss **Figur 3** die Einstellsymbole 45, 46, 47 und weitere Symbole 48, 49 zur Modifikation des Rezeptes. Das modifizierte Rezept wird vom Bediengerät 4 an die Steuereinheit 12 übermittelt. Das Rezept wird eine Rezeptdatenbank übernommen. Dabei kann vorgesehen sein, dass das Rezept nur übernommen und permanent in der Getränkezubereitungsmaschine 1 gespeichert wird, wenn der Benutzer die Übernahme durch eine Eingabe an der Bedieneinheit 14 bestätigt. Es kann auch vorgesehen sein, beispielsweise bei einer öffentlich betriebenen Getränkezubereitungsmaschine 1, dass Zubereitungsvorschriften nur durch einen Benutzer mit entsprechenden Änderungsprivilegien permanent speicherbar sind. Ein Benutzer ohne diese Privilegien kann eine Zubereitungsvorschrift ggf. modifizieren und in modifizierter Form ausführen, aber nicht auf der Getränkezubereitungsmaschine 1 abspeichern, sondern optional nur auf seinem eigenen Bediengerät 4.
5. Der Benutzer wählt über die Bedieneinheit 14 das zuzubereitende Rezept aus der Rezeptdatenbank aus oder bestätigt die Wahl eines am Bediengerät 4 ausgewählten oder neu konfigurierten Rezeptes.
6. Die Bedieneinheit 14 oder das Bediengerät 4 übermittelt einen Befehl zur Zubereitung des gewählten Rezeptes an die Steuereinheit 12.
7. Die Steuereinheit 12 erhält den Befehl zur Zubereitung des gewählten Rezeptes.
8. Die Steuereinheit 12 überprüft, ob sie von der Kapselerkennungseinheit 132 eine gültige Portionenkategorie 31 und eine Portionenidentität 32 erhalten hat.
9. Die Steuereinheit 12 sucht anhand der Portionenidentität 32 oder nur der Portionenkategorie 31 die zugeordneten ersten Zubereitungsparameter (bei einer Kaffeemaschine beispielsweise in Form eines Brühprofils) und passt anpassbare Zubereitungsparameter entsprechend der Rezeptauswahl des Benutzers an. Falls die Portionenidentität 32 und die Rezeptauswahl zueinander passen, kann ein entsprechender Hinweis angezeigt werden. Optional kann eine Empfehlung angezeigt werden, falls die Portionenidentität 32 und die Rezeptauswahl nicht zueinander passen. Bei einer Kaffeemaschine ergeben sich damit das Brühprofil für die Brühung und gegebenenfalls auch Parameter für die Zubereitung von Milch respektive Milchschaum.
10. Die Steuereinheit 12 steuert die Zubereitung anhand der Zubereitungsparameter.

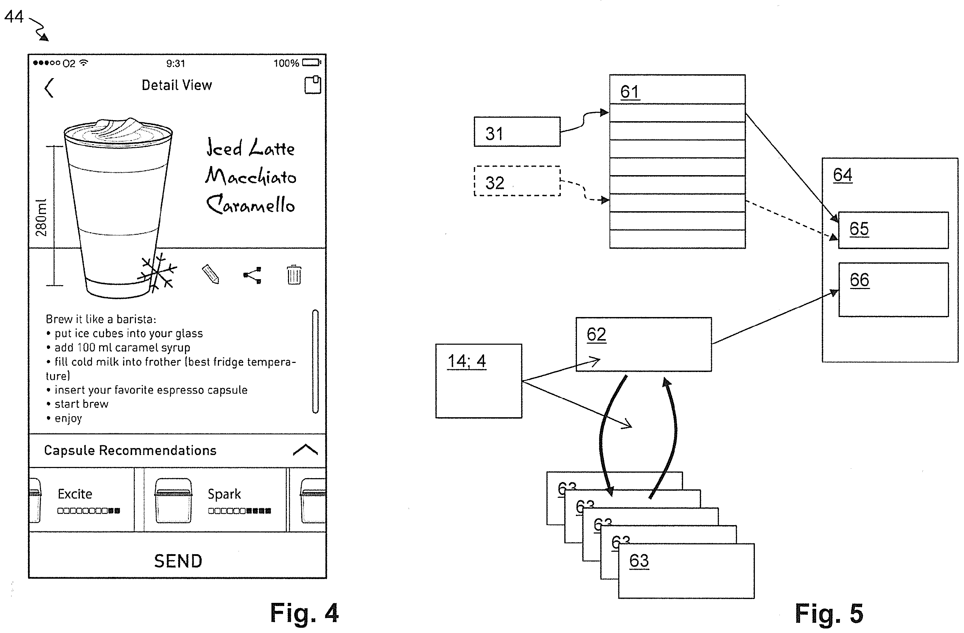

Die obigen Schritte können auch in einer anderen Reihenfolge ausgeführt werden. Beispielsweise können die Schritte zur Auswahl eines Rezeptes vor dem Einlegen der Portionspackung 3 ausgeführt werden. Dabei kann nach der Wahl des Rezeptes eine Empfehlung für die Wahl einer für das Rezept geeigneten Produktesorte respektive Portionenidentität 32 am Bediengerät 4 oder der Bedieneinheit 14 angezeigt werden **(****Figur 4****).**

**Figur 5** zeigt schematisch bei der Bestimmung der Zubereitungsparameter verwendete Daten: In der Zuordnungstabelle 61 sind erste Zubereitungsparameter von Zubereitungsvorschriften gespeichert, die nach Massgabe einer Portionenidentität 32 oder einer Portionenkategorie 31 ausgewählt und als portionenspezifischer Teil 65 in eine umzusetzende Zubereitungsvorschrift 64 übergeben werden. Ein benutzerspezifischer Teil 66 der umzusetzenden Zubereitungsvorschrift 64, mit anpassbaren Zubereitungsparametern wird durch den Benutzer über eine Interfaceeinheit von Bedieneinheit 14 oder Bediengerät 4 als Rezept 62 ausgewählt. Dabei kann der Benutzer Rezepte verwalten und modifizieren, d.h. ein Rezept 62 aus einer Menge von gespeicherten Rezepten 63 abrufen, modifizieren, kopieren, abspeichern und zur Zubereitung auswählen. Dieses Verwalten und Modifizieren der Rezepte kann unter Speicherung der Rezepte in der Getränkezubereitungsmaschine 1 selber und/oder im externen Bediengerät 4 geschehen.

Für den benutzerspezifischen Teil 66 können Standardwerte gemäss aus der Zuordnungstabelle 61 vorliegen, für den Fall dass der Benutzer kein Rezept 62 wählt.

## Patentansprüche

1. Verfahren zum Betrieb einer Getränkezubereitungsmaschine (1), zum Erzeugen eines Gesamtproduktes unter Verwendung einer Portionspackung (3), und gemäss einer Zubereitungsvorschrift, aufweisend die folgenden Schritte:
• Erfassen eines Portionencodes (33) einer Portionspackung (3) mittels einer Portionenerkennungseinheit (132);
• Ermitteln von dem Portionencode (33) zugeordneten und in der Getränkezubereitungsmaschine (1) gespeicherten ersten Zubereitungsparametern der Zubereitungsvorschrift, und Ermitteln von zweiten Zubereitungsparametern der Zubereitungsvorschrift, wobei mindestens einer der ersten und/oder zweiten Zubereitungsparameter ein anpassbarer Zubereitungsparameter ist;
• Erfassen einer Benutzereingabe zur Anpassung mindestens eines anpassbaren Zubereitungsparameters;
• Zubereitung des Gesamtproduktes gemäss der Zubereitungsvorschrift mit mindestens einem angepassten Zubereitungsparameter;
dadurch gekennzeichenet, dass wenigstens ein Zubereitungsparameter nicht anpassbar ist.

2. Verfahren gemäss Anspruch 1, wobei der wenigstens eine nicht anpassbare Zubereitungsparameter einer der dem Portionencode zugeordneten und in der Getränkezubereitungsmaschine gespeicherten ersten Zubereitungsparameter ist.

3. Verfahren gemäss Anspruch 1 oder 2, wobei zum Erfassen der Benutzereingabe zur Anpassung des mindestens einen anpassbaren Zubereitungsparameters dem Benutzer auf einer Interfaceeinheit (4; 14) eine Auswahl eines oder mehrerer solcher Zubereitungsparameter angezeigt und eine Eingabe des Benutzers zur Anpassung des Zubereitungsparameters erfasst wird;
wobei insbesondere die Interfaceeinheit eine Bedieneinheit (14) der Getränkezubereitungsmaschine (1) oder ein Benutzerinterface (44) eines Bediengerätes (4), welches über eine Kommunikationsverbindung (53) mit der Getränkezubereitungsmaschine (1) verbunden ist, ist.

4. Verfahren gemäss einem der Ansprüche 1 bis 3, wobei ein oder mehrere vom Benutzer angepasste Zubereitungsparameter in der Getränkezubereitungsmaschine (1) als Rezept speicherbar sind, und zu einem späteren Zeitpunkt zum Erfassen der Benutzereingabe zur Anpassung des mindestens einen anpassbaren Zubereitungsparameters wieder abrufbar sind.

5. Verfahren gemäss einem der vorangehenden Ansprüche, wobei der mindestens eine anpassbare Zubereitungsparameter eine Menge des Gesamtproduktes oder eine Menge eines von mehreren Teilprodukten, aus dem sich das Gesamtprodukt zusammensetzt, definiert.

6. Verfahren gemäss Anspruch 5, wobei die Getränkezubereitungsmaschine (1) eine Kaffeemaschine ist, welche zur Zubereitung eines Gesamtproduktes mit einem ersten Anteil (21) aus Kaffee als erstem Teilprodukt und einem zweiten Anteil (22) aus Milch als zweitem Teilprodukt ausgebildet ist, und ein erster anpassbarer Zubereitungsparameter einen ersten Mengenanteil des ersten Anteils (21) und ein zweiter anpassbarer Zubereitungsparameter einen zweiten Mengenanteil des zweiten Anteils (22) definiert.

7. Verfahren gemäss Anspruch 6, wobei weitere anpassbare Zubereitungsparameter mindestens eines definieren von:
• einer Milchtemperatur;
• einer Behältergrösse oder ein Gesamtvolumen des Gesamtproduktes;
• einer Menge von Milchschaum;
• eines Mengenverhältnisses von Milch und Milchschaum;
• einer zeitlichen Reihenfolge, in welcher die Teilprodukte herzustellen sind.

8. Verfahren gemäss einem der vorangehenden Ansprüche wobei der Portionencode (33) eine Portionenidentität (32) definiert, und in der Getränkezubereitungsmaschine (1) eine Zuordnung von Portionenidentitäten (32) jeweils zu ersten Zubereitungsparametern und/oder Zusatzinformation gespeichert ist, aufweisend die Schritte:
• Ermitteln, anhand der Portionenidentität (32) einer Portionspackung (3), von zugeordneten ersten Zubereitungsparametern und/oder Zusatzinformation;
• falls keine zugeordneten ersten Zubereitungsparameter und/oder Zusatzinformation vorliegen, Darstellen einer Anzeige an den Benutzer mit einer Aufforderung, ein Herunterladen von aktualisierten ersten Zubereitungsparametern und/oder Zusatzinformationen durchzuführen oder zu ermöglichen.

9. Verfahren gemäss einem der vorangehenden Ansprüche wobei der Portionencode (33) eine Portionenkategorie (31) und eine Portionenidentität (32) definiert, und in der Getränkezubereitungsmaschine (1) eine Zuordnung von Portionenkategorien (31) und Portionenidentitäten (32) jeweils zu ersten Zubereitungsparametern gespeichert ist,
und wobei im Schritt des Ermittelns von dem Portionencode (33) zugeordneten und gespeicherten ersten Zubereitungsparametern der Zubereitungsvorschrift die folgenden Schritte ausgeführt werden:
• Ermitteln, anhand der Portionenidentität (32) einer Portionspackung (3), von zugeordneten ersten Zubereitungsparametern;
• falls keine zugeordneten ersten Zubereitungsparameter gespeichert sind, Ermitteln von der Portionenkategorie (31) zugeordneten ersten Zubereitungsparametern;
und die so ermittelten ersten Zubereitungsparameter in den weiteren Schritten verwendet werden.

10. Verfahren gemäss einem der Ansprüche 1 bis 8, wobei der Portionencode (33) eine Portionenkategorie (31) definiert, und in der Getränkezubereitungsmaschine (1) eine Zuordnung von Portionenkategorien (31) jeweils zu ersten Zubereitungsparametern gespeichert ist,
und wobei im Schritt des Ermittelns von dem Portionencode (33) zugeordneten und gespeicherten ersten Zubereitungsparametern der folgende Schritt ausgeführt wird:
• Ermitteln, anhand der Portionenkategorie (31) einer Portionspackung (3), von zugeordneten ersten Zubereitungsparametern der Zubereitungsvorschrift;
und die so ermittelte ersten Zubereitungsparameter in den weiteren Schritten verwendet werden.

11. Verfahren gemäss einem der vorangehenden Ansprüche wobei der Portionencode (33) eine Portionenkategorie (31) und eine Portionenidentität (32) definiert, und in der Getränkezubereitungsmaschine (1) mindestens eine der Portionenkategorien (31) als Spezialkategorie gekennzeichnet ist und eine Zuordnung von Portionenidentitäten (32) jeweils zu ersten Zubereitungsparametern gespeichert ist,
und wobei im Schritt des Ermittelns von dem Portionencode (33) zugeordneten und gespeicherten ersten Zubereitungsparametern der Zubereitungsvorschrift die folgenden Schritte ausgeführt werden:
• Ermitteln, anhand der Portionenkategorie (31) einer Portionspackung (3), ob diese der Spezialkategorie zugehört;
• falls dies der Fall ist, Ermitteln, anhand der Portionenidentität (32) der Portionspackung (3), von zugeordneten ersten Zubereitungsparametern;
und die so ermittelten ersten Zubereitungsparameter in den weiteren Schritten verwendet werden.

12. Getränkezubereitungsmaschine (1) zum Erzeugen eines Gesamtproduktes unter Verwendung einer Portionspackung (3), wobei die Getränkemaschine zur Durchführung des Verfahrens gemäss einem der Ansprüche 1 bis 11 ausgebildet ist, wobei sie eine digitale Datenverarbeitungseinheit aufweist, die einen internen Speicher aufweist, in den ein Computerprogramm geladen ist, das Computerprogrammcodemittel aufweist, welche, wenn sie in der digitalen Datenverarbeitungseinheit der Getränkezubereitungsmaschine (1) ausgeführt werden, diese zur Ausführung der für die Getränkezubereitungsmaschine (1) vorgesehenen Schritte des Verfahrens bringen.

13. System, aufweisend mindestens eine Getränkezubereitungsmaschine (1) und eine Portionspackung (3), zum Erzeugen eines Gesamtproduktes unter Verwendung der Portionspackung (3), wobei das System zur Durchführung des Verfahrens gemäss einem der Ansprüche 1 bis 11 ausgebildet ist, wobei die Getränkezubereitungsmaschine (1) eine Getränkezubereitungsmaschine (1) gemäss Anspruch 12 ist.

14. System gemäss Anspruch 13, ferner aufweisend ein von der Getränkezubereitungsmaschine (1) getrenntes Bediengerät (4), welches zum Erfassen der Benutzereingabe zur Anpassung des mindestens einen anpassbaren Zubereitungsparameters ausgebildet ist, und wobei insbesondere das Bediengerät (4) ein Mobiltelefon oder Smartphone oder ein anders gearteter tragbarer Computer ist.

## Claims

1. A method for the operation of a drinks preparation machine (1), for producing a total product amid the use of a portion package (3), and according to a preparation prescript, comprising the following steps:
• detecting a portion code (33) of a portion package (3) by way of a portion recognition unit (132);
• determining first preparation parameters of the preparation prescript which are assigned to the portion code (33) and are stored in the drinks preparation machine (1), and determining second preparation parameters of the preparation prescript, wherein at least one of the first and/or the second preparation parameters is an adaptable preparation parameter;
• detecting a user input for adapting at least one adaptable preparation parameter;
• preparing the total product according to the preparation prescript with at least one adapted preparation parameter;
**characterized in that** at least one preparation parameter is not adaptable.

2. A method according to claim 1, wherein the at least one non-adaptable preparation parameter is one of the first preparation parameters which are assigned to the portion code and are stored in the drinks preparation machine.

3. A method according to claim 1 or 2, wherein a selection of one or more such preparation parameters is displayed to the user on an interface unit (4; 14) for detecting the user input for adapting the at least one adaptable preparation parameter, and an input of the user for adapting the preparation parameter is detected;
wherein in particular the interface unit is an operating unit (14) of the drinks preparation machine (1) or a user interface of an operating appliance (4) which is connected to the drinks preparation machine (1) via a communication connection (53).

4. A method according to one of the claims 1 to 3, wherein one or more preparation parameters which are adapted by the user are storable in the drinks preparation machine (1) as a recipe, and can be retrieved again at a later point in time for detecting the user input for adapting the at least one adaptable preparation parameter.

5. A method according to one of the preceding claims, wherein the at least one adaptable preparation parameter defines a quantity of a total product or a quantity of one of several part-products, from which the total product is composed.

6. A method according to claim 5, wherein the drinks preparation machine (1) is a coffee machine which is designed for preparing a total product with a first share (21) of coffee as a first part-product and with a second share (22) of milk as a second part-product, and a first adaptable preparation parameter defines a first quantity share of the first share (21) and a second adaptable preparation parameter a second quantity share of the second share (22).

7. A method according to claim 6, wherein further adaptable preparation parameters define at least one of:
• a milk temperature;
• a receptacle size or a total volume of the total product;
• a quantity of milk froth;
• a quantity ratio of milk and milk froth;
• a temporal sequence, in which the part-products are to be created.

8. A method according to one of the preceding claims, wherein the portion code (33) defines a portion identity (32) and an assignment of portion identities (32) to first preparation parameters and/or additional information is stored in the drinks preparation machine (1), comprising the steps:
• determining assigned first preparation parameters and/or additional information on the basis of the portion identity (32) of a portion package (3);
• if no assigned first preparation parameters and/or additional information are present, representing a display to the user with a request to carry out or to permit a downloading of updated first preparation parameters and/or additional information.

9. A method according to one of the preceding claims, wherein the portion code (33) defines a portion category (31) and a portion identity (32), and an assignment of portion categories (31) and portion identities (32) to first preparation parameters is stored in the drinks preparation machine (1),
and wherein in the step of determining stored first preparation parameters of the preparation prescript which are assigned to the portion code (33), the following steps are carried out:
• determining assigned first preparation parameters on the basis of the portion identity (32) of a portion package (3);
• if no assigned first preparation parameters are stored, determining first preparation parameters which are assigned to the portion category (31);
and the thus determined first preparation parameters are used in the further steps.

10. A method according to one of the claims 1 to 8, wherein the portion code (33) defines a portion category (31), and an assignment of portion categories (31) to first preparation parameters is stored in the drinks preparation machine (1),
and wherein in the step of determining stored first preparation parameters which are assigned to the portion code (33), the following step is carried out:
• determining assigned, first preparation parameters of the preparation prescript on the basis of the portion category (31) of a portion package (3);
and the thus determined first preparation parameters are used in the further steps.

11. A method according to one of the preceding claims, wherein the portion code (33) defines a portion category (31) and a portion identity (32), and in the drinks preparation machine (1) at least one of the portion categories (31) is characterised as a special category and an assignment of portion identities (32) to first preparation parameters is stored,
and wherein in the step of determining stored first preparation parameters of the preparation prescript which are assigned to the portion code (33), the following steps are carried out:
• determining, on the basis of the portion category (31) of a portion package (3), whether this belongs to the special category:
• if this is the case, determining assigned, first preparation parameters on the basis of the portion identity (32) of the portion package (3);
and the thus determined first preparation parameters are used in the further steps.

12. A drinks preparation machine (1) for producing a total product amid the use of a portion package (3), wherein the drinks preparation machine is designed for carrying out the method according to one of the claims 1 to 11, and wherein the drinks preparation machine comprises a digital data processing unit comprising an internal memory into which a computer program is loaded which comprises computer program code means, the computer program code means, when implemented in the digital data processing unit, effect that the drinks preparation machine carries out the steps of the method which are envisaged to be carried out by the drinks preparation machine.

13. A system, comprising at least one drinks preparation machine (1) and a portion package (3), for producing a total product amid the use of the portion package (3), wherein the system is designed for carrying out the method according to one of the claims 1 to 11, wherein the drinks preparation machine (1) is a drinks preparation machine (1) according to claim 12.

14. A system according to claim 13, further comprising an operating appliance (4) which is separate from the drinks preparation machine (1) and which is designed for detecting the user input for adapting the at least one adaptable preparation parameter and wherein in particular the operating appliance (4) is a mobile telephone or smartphone or a different type of portable computer.

## Revendications

1. Procédé d'utilisation d'une machine (1) de préparation de boissons servant à former un produit global en recourant à une portion (3) en cartouche conformément à des prescriptions de préparation, le procédé comprenant les étapes suivantes :
- au moyen d'une unité (132) de reconnaissance de portion, saisie d'un code de portion (33) de la portion (3) en cartouche,
- détermination de premiers paramètres des prescriptions de préparation, associés au code de portion (33) et conservés en mémoire dans la machine (1) de préparation de boissons, et détermination de deuxièmes paramètres des prescriptions de préparation, un ou plusieurs des premiers et/ou des deuxièmes paramètres des prescriptions de préparation étant des paramètres de préparation adaptables,
- saisie d'une entrée effectuée par l'utilisateur pour adapter le ou les paramètres de préparation adaptables,
- préparation du produit global conformément aux prescriptions de préparation avec un ou plusieurs paramètres adaptables,
**caractérisé en ce que**
un ou plusieurs paramètres de préparation ne sont pas adaptables.

2. Procédé selon la revendication 1, dans lequel le ou les paramètres de préparation non adaptables sont des premiers paramètres de préparation associés au code de portion et conservés en mémoire dans la machine de préparation de boissons.

3. Procédé selon les revendications 1 ou 2, dans lequel pour saisir l'entrée effectuée par l'utilisateur pour adapter le ou les paramètres adaptables, une sélection d'un ou plusieurs de ces paramètres de préparation est présentée sur une unité d'interface (4 ; 14) et une entrée effectuée par l'utilisateur pour adapter le ou les paramètres de préparation est saisie, et en particulier, l'unité d'interface étant une unité de commande (14) de la machine (1) de préparation de boissons ou une interface d'utilisateur (44) d'un appareil de commande (4) raccordé à la machine (1) de préparation de boissons par une liaison de communication (53).

4. Procédé selon l'une des revendications 1 à 3, dans lequel un ou plusieurs paramètres de préparation adaptés par l'utilisateur peuvent être conservés en mémoire dans la machine (1) de préparation de boissons sous la forme d'une recette et peuvent être consultés à un moment ultérieur pour saisir l'entrée effectuée par l'utilisateur pour adapter le ou les paramètres de préparation adaptables.

5. Procédé selon l'une des revendications précédentes, dans lequel les ou les paramètres de préparation adaptables définissent la quantité du produit global ou la quantité d'un ou plusieurs produits partiels qui composent le produit global.

6. Procédé selon la revendication 5, dans lequel la machine (1) de préparation de boissons est une machine à café configurée pour préparer un produit global présentant une première partie (21) formée de café comme premier produit partiel et une deuxième partie (22) formée de lait comme deuxième produit partiel, un premier paramètre de préparation adaptable définissant une première quantité de la première partie (21) et un deuxième paramètre de préparation adaptable définissant une deuxième quantité de la deuxième partie (22).

7. Procédé selon la revendication 6, dans lequel d'autres paramètres de préparation adaptables définissent au moins une des suivants:
- la température du lait,
- la taille du récipient ou le volume total du produit global,
- la quantité de mousse de lait,
- le rapport entre la quantité de lait et celle de mousse de lait,
- la succession dans laquelle des produits partiels doivent être préparés.

8. Procédé selon l'une des revendications précédentes, dans lequel le code de portion (33) définit une identité de portion (32), et une association entre des identités de portion (32) et/ou des informations supplémentaires est conservée dans la machine (1) de préparation de boissons, le procédé comprenant les étapes qui consistent à :
- à l'aide de l'identité de portion (32) d'une portion (3) en cartouche, déterminer les premiers paramètres de préparation et/ou les informations supplémentaires,
- au cas où aucun premier paramètre de préparation et/ou aucune information supplémentaire ne sont associés, présenter à l'utilisateur un message l'invitant à télécharger des premiers paramètres de préparation et/ou informations supplémentaires ou permettre leur téléchargement.

9. Procédé selon l'une des revendications précédentes, dans lequel le code de portion (33) définit une catégorie (31) de portions et une identité de portion (32), une association des catégories (31) de portions et des identités de portion (32) avec chacun des premiers paramètres de préparation étant conservée dans la machine (1) de préparation de boissons, et dans lequel les étapes suivantes sont exécutées lors de l'étape de détermination de premiers paramètres de préparation de la prescription de préparation associés au code de portion (33) et conservés en mémoire :
- à l'aide de l'identité de portion (32), déterminer les premiers paramètres de préparation associés à une portion (3) en cartouche,
- au cas où aucun premier paramètre de préparation n'est conservé en mémoire, déterminer les premiers paramètres de préparation associés à la catégorie (31) de portions,
les premiers paramètres de préparation ainsi déterminés étant utilisé dans les autres étapes.

10. Procédé selon l'une des revendications 1 à 8, dans lequel le code de portion (33) définit une catégorie (31) de portions, une association entre les catégories (31) de portions et chacun des premiers paramètres de préparation étant conservée en mémoire dans la machine (1) de préparation de boissons, et dans lequel l'étape suivante est exécutée lors de l'étape de détermination de premiers paramètres de préparation associés au code de portion (33) et conservés en mémoire :
- à l'aide de la catégorie (31) de portions, déterminer les premiers paramètres de préparation des prescriptions de préparation associés à une portion (3) en cartouche,
les premiers paramètres de préparation ainsi déterminés étant utilisés dans les autres étapes.

11. Procédé selon l'une des revendications précédentes, dans lequel le code de portion (33) définit une catégorie (31) de portions et une identité de portion (32), dans lequel au moins une des catégories (31) de portions est caractérisées comme catégorie spéciale et une association entre les identités de portion (32) et chacun des paramètres de préparation est conservée en mémoire dans la machine (1) de préparation de boissons, et dans lequel les étapes suivantes sont exécutées lors de l'étape de détermination de premiers paramètres de préparation de la prescription de préparation associés au code de portion (33) et conservés en mémoire :
- à l'aide de la catégorie (31) de portions d'une portion (3) en cartouche, déterminer si cette dernière appartient aux catégories spéciales,
- si c'est le cas, déterminer à l'aide de l'identité de portion (32) les premiers paramètres de préparation associés à la portion (3) en cartouche, les premiers paramètres de préparation ainsi déterminés étant utilisés dans les autres étapes.

12. Machine (1) de préparation de boissons servant à former un produit global en recourant à une portion (3) en cartouche, la machine de préparation de boissons étant configurée pour mettre en oeuvre le procédé selon l'une des revendications 1 à 11 et présentant une unité de traitement de données numériques dotée d'une mémoire interne dans laquelle est chargé un programme qui présente des moyens de code de programme informatique qui, lorsqu'ils sont exécutés dans l'unité de traitement de données numériques de la machine (1) de préparation de boissons, amènent cette dernière à effectuer les étapes prévues pour la machine (1) de préparation de boissons.

13. Système présentant une ou plusieurs machines (1) de préparation de boissons et une portion (3) en cartouche et servant à former un produit global en recourant à la portion (3) en cartouche, le système étant configuré pour mettre en oeuvre le procédé selon l'une des revendications 1 à 11, la machine (1) de préparation de boissons étant une machine (1) de préparation de boissons selon la revendication 12.

14. Système selon la revendication 13, présentant en outre un appareil de commande (4) séparé de la machine (1) de préparation de boissons et configuré pour saisir une entrée effectuée par l'utilisateur pour adapter le ou les paramètres de préparation adaptables, et en particulier, l'appareil de commande (4) étant un téléphone mobile, un smartphone ou un ordinateur portable d'un autre type.
